# FASCICULE DE BREVET EUROPEEN

(11) **EP 0 498 506 B1**
(45) Date de publication et mention de la délivrance du brevet: **18.01.1995**
(21) Numéro de dépôt: 92200307.4
(22) Date de dépôt: 04.02.1992
(51) Int. Cl.: A23C 21/02

(54) **Procédé de fabrication d'un levain lactique, levain obtenu, fabrication d'un complément alimentaire à partir de ce levain et produit obtenu**
Verfahren zum Herstellen eines Milchsäuresauerteigs, den dadurch erhaltenden Sauerteig, die Herstellung von einem Futterzusatz unter Verwendung dieses Sauerteigs und dadurch erhaltendes Produkt
Method for manufacturing a lactic leaven, the leaven so obtained, the manufacture of a food supplement using this leaven and the product so obtained

(30) Priorité: 08.02.1991 FR 9102291
(43) Date de publication de la demande: 12.08.1992
(73) Titulaire: BIOADDITIVE SA, F-47310 Estillac (FR)
(72) Inventeur: Chavant, Louis, F-31000 Toulouse (FR); Rollan, Serge, F-09100 Pamiers (FR)
(74) Mandataire: Cabinet BARRE LAFORGUE & associés

(56) Documents cités:
- EP-A- 0 346 884
- FR-A- 2 491 495
- US-A- 3 818 109
- PATENT ABSTRACTS OF JAPAN vol. 12, no. 59 (C-478)(2906) 23 Février 1988
- PATENT ABSTRACTS OF JAPAN vol. 10, no. 373 (C-391)(2430) 12 Décembre 1986

## Description

L'invention concerne un procédé de fabrication d'un levain lactique, du type consistant à faire fermenter un lactosérum en présence d'un ferment lactique mixte renfermant une symbiose de levures et de bactéries. L'invention s'étend au nouveau levain obtenu caractérisé par sa nature et la composition des microorganismes qu'il contient. L'invention vise également un procédé de fabrication d'un nouveau complément alimentaire en particulier pour l'alimentation animale à partir dudit levain ainsi que le nouveau complément alimentaire obtenu qui se caractérise par une composition physico-chimique et microbienne nouvelle.

On a déjà ensemencé des lactosérums au moyen de levures, notamment levure Kluyveromyces fragilis, pour fabriquer des protéines unicellulaires (P.O.U.) utilisables comme produit alimentaire.

Par ailleurs, on connaît des levains lactiques qui sont obtenus par fermentation d'un lait à partir d'un ferment constitué de grains de kéfir lacté renfermant dans une matrice polysaccharidique une symbiose de levures lactose+ et de diverses bactéries (EP-A-346884). Les levains de ce type ont été jusqu'à présent fabriqués en utilisant du lait et au moyen de grains de kéfir ne comportant, comme levures, que des levures lactose+ qui ont la propriété de décomposer le lactose du lait par double fermentation. Ce levain permet de fabriquer une boisson liquide, pétillante et légèrement alcoolisée : le kéfir, qui est bien connue en Europe du Nord et dans les pays de l'Est et possède une saveur aigrelette, acide et un caractère instable dans le temps (conservation maximum : 4 jours à + 4° C).

La présente invention se propose de fournir un nouveau levain lactique adapté pour fabriquer un complément alimentaire, notamment pour l'alimentation animale, du type lactosérum fermenté, apte à améliorer la digestibilité des nutriments, développer un effet protecteur du système digestif et présenter un effet exhausteur de goût.

Un autre objectif de l'invention est de fournir un nouveau levain permettant de fabriquer un complément alimentaire liquide qui soit stable dans le temps et puisse être utilisé tel quel sous forme liquide concentré ou non, ou lyophilisé sous forme de poudre.

Un autre objectif est de fabriquer un complément alimentaire riche en vitamines B, en particulier en acide orotique (B₁₃) et en acide folique (B₉)(facteurs de croissance).

Le procédé de fabrication du levain lactique conforme à l'invention est du type consistant à faire fermenter un lactosérum en présence d'un ferment lactique mixte renfermant une symbiose de levures et de bactéries ; le procédé conforme à la présente invention se caractérise en ce que :
- le ferment utilisé comprend une matrice polysaccharidique englobant, d'une part, au moins deux levures : levure du genre Pichia espèce membranaefaciens et levure du genre Candida espèce pseudotropicalis, d'autre part, au moins les deux bactéries suivantes : bactérie du genre Lactococcus espèce lactis, bactérie du genre Lactobacillus espèce fermentum,
- le lactosérum contenant le ferment est soumis à une première fermentation à une température sensiblement comprise entre 26° C et 35° C pendant une durée sensiblement comprise entre 16 heures et 25 heures,
- le produit obtenu est soumis à une seconde fermentation à une température sensiblement comprise entre 21° C et 28° C pendant une durée sensiblement comprise entre 24 et 48 heures.

De préférence l'on utilise un ferment renfermant les microorganismes suivants :
. levure du genre Pichia espèce membranaefaciens,
. levure du genre Candida espèce pseudotropicalis,
. bactéries du genre Lactococcus espèce lactis sous-espèce lactis,
. bactéries du genre Lactococcus espèce raffinolactis,
. bactéries du genre Lactococcus espèce lactis, sous espèce diacetylactis,
. bactéries du genre Lactobacillus espèce fermentum,
. bactéries du genre Bifidobacterium,
. bactéries au genre Acetobacter,
. bactéries du genre Leuconostoc.

La matrice polysaccharidique est avantageusement à base de glucose et de galactose.

Il est possible d'utiliser un ferment préalablement préparé à partir de cultures des microorganismes sus-évoqués. Il est également possible d'utiliser comme ferment un produit naturel qui est un sous-produit du lait caillé : ce sous-produit qui constitue un autre type de grains ce kéfir lacté (de la même famille que le ferment connu évoqué) n'a jamais été utilisé comme ferment ; il se différencie de façon essentielle du ferment connu déjà utilisé, par sa composition microbienne spécifique qui correspond à la symbiose décrite ci-dessus : levures Pichia membranaefaciens, Candida pseudotropicalis et de bactéries Lactococcus lactis et raffinolactis, Lactobacillus fermentum Bifidobacterium, Acetobacter et Leuconostoc. Il est également possible d'utiliser comme ferment un produit naturel qui est un sous-produit de fermentation de certains liquides sucrés, désigné par "grains de kéfir sucré" (parfois "tibi") ; ce produit se caractérise par une composition microbienne analogue à celle du kéfir lacté précité.

L'originalité du procédé de fabrication de levain conforme à l'invention se situe donc à trois niveaux : d'une part l'utilisation d'un lactosérum, d'autre part l'utilisation d'un ferment de composition microbienne spécifique, différent des ferments utilisés dans les procédés connus (en particulier par la présence des levures Pichia membranaefaciens et Candida pseudotropicalis), enfin, le mode de fermentation consistant à réaliser une double fermentation à des températures spécifiques.

Le levain ainsi obtenu se différencie radicalement des levains connus et permet, comme on le verra plus loin, de fabriquer un complément alimentaire ayant des caractéristiques physico-chimiques et biologiques nouvelles, totalement différentes de celles des compléments connus.

Selon un mode de mise en oeuvre préféré du procédé de fabrication du levain conforme à l'invention, le ferment mixte sus-défini est mélangé au lactosérum de façon que le mélange en début de fermentation contienne :
. entre 10⁵ et 10⁶ germes de levure Pichia membranaefaciens par millilitre de lactosérum,
. entre 10⁴ et 10⁵ germes de levure Candida pseudotropicalis par millilitre de lactosérum,
. entre 10⁷ et 10⁸ bactéries Lactococcus par millilitre de lactosérum,
. et entre 10⁴ et 10⁷ bactéries Lactobacillus par millilitre de lactosérum.

Dans le cas où le ferment utilisé consiste en grains de kéfir lacté ou sucré du type précité, ces quantités de germes correspondent sensiblement à une concentration en grains de kéfir comprise entre 40 g et 80 g par litre de lactosérum.

Par ailleurs, les expérimentations effectuées ont montré que, dans le procédé de l'invention, les conditions optimales de la double fermentation étaient les suivantes : première fermentation à une température sensiblement égale à 30° C pendant une durée sensiblement égale à 20 heures, seconde fermentation à une température sensiblement égale à 25° C pendant une durée sensiblement égale à 36 heures, (par "sensiblement égale", on entend une égalité à + 5 % près). Ces conditions favorisent le développement dans le lactosérum des microorganismes recherchés à savoir : levure Candida pseudotropicalis, Pichia membranaefaciens, bactéries du type lactocoque.

Le procédé de fabrication du levain visé est compatible avec l'emploi de tout type de lactosérum (doux, acide, mixte, ou perméat) ; on préfèrera utiliser un lactosérum contenant entre 40 g et 52 g de lactose par litre et présentant un pH compris en 4,3 et 5.

Au terme de la double fermentation, la phase solide peut être laissée in situ dans la phase liquide, l'ensemble constituant le levain qui sert à fabriquer ensuite le complément alimentaire. Il est également possible, et cela est préféré pour des raisons de rentabilité industrielle, de séparer au terme de la double fermentation, la phase liquide et la phase solide ; la phase solide peut ainsi être recyclée pour un nouveau cycle de fabrication de levain, cependant que la phase liquide peut être stabilisée par congélation ou lyophilisation et conditionnée pour être ultérieurement utilisée comme levain dans la fabrication du complément alimentaire. Il est à noter que la lyophilisation précitée vise le levain (donc de petites quantité de produits) et n'obère pas les coûts d'exploitation.

L'invention s'étend au nouveau levain lactique fabriqué par le procédé défini plus haut ; ce levain se caractérise par la présence dans un lactosérum :
. de polysaccharides en solution, de concentration comprise entre 0,05 et 0,1 g par gramme de milieu,
. de levure Candida pseudotropicalis en quantité comprise entre 10⁶ et 10⁷ germes par gramme de milieu,
. de levure Pichia membranaefaciens, en quantité comprise entre 10⁴ et 10⁶ germes par gramme de milieu,
. de bactéries Lactococcus en quantité comprise entre 10⁷ et 10⁹ bactéries par gramme de milieu,
. et de bactéries Lactobacillus en quantité comprise entre 10⁵ et 10⁷ bactéries par gramme de milieu.

Outre ces germes essentiels, le levain conforme à l'invention peut également contenir les germes suivants (en particulier lorsqu'il est fabriqué à partir de grains de kéfir naturels du type précité) : bactéries Bifidobacterium entre 10³ et 10⁵ par gramme de milieu, bactéries Acetobacter entre 10³ et 10⁵ par gramme, bactéries Leuconostoc entre 10³ et 10⁵ par gramme.

Sur le plan des rapports entre les différents germes, les analyses microbiologiques ont montré que le levain de l'invention se caractérise par :
. un rapport du nombre de germes de la levure du genre Candida au nombre de germes des autres levures compris entre 20 et 60,
. un rapport du nombre de bactéries sous forme de coques (Lactococcus, Acetobacter, Leuconostoc) au nombre de bactéries sous forme de bacille (Lactobacillus, Bifidobacterium) compris entre 150 et 250.

Par ailleurs, le levain se caractérise également par un pH sensiblement compris entre 3,2 et 3,8 et par la composition physico-chimique suivante :
. présence de polysaccharides en solution constitués par du glucose et du galactose, en pourcentage relatif compris entre 0,6 et 1 g de glucose par g de galactose,
. présence d'acide orotique (vitamine B₁₃) en proportion comprise entre 20 et 70 mg par litre de milieu.

L'invention s'étend à la fabrication d'un complément alimentaire du type lactosérum fermenté, à partir du levain précédemment défini. Cette fabrication consiste à soumettre un lactosérum à une double fermentation et se caractérise par l'utilisation d'un levain du type précité, en particulier en proportion pondérale par rapport au lactosérum comprise entre 1 % et 4 %, et par les conditions spécifiques de la double fermentation qui sont les suivantes :
- première fermentation à une température sensiblement comprise entre 26° C et 35° C, en particulier sensiblement égale à 30° C, pendant une durée sensiblement comprise entre 24 et 72 heures, en particulier sensiblement égale à 48 heures,
- seconde fermentation à une température sensiblement comprise entre 21° C et 28° C inférieure à la première, en particulier sensiblement égale à 25° C, pendant une durée sensiblement comprise entre 48 et 96 heures, en particulier sensiblement égale à 72 heures.

Un tel procédé conduit à un complément alimentaire liquide, aromatisé, qui est stable dans le temps ; cette rigoureuse stabilité, provient d'un pH compris entre 3,2 et 3,8. Ce complément possède les propriétés suivantes : facteur favorisant la digestibilité des nutriments, exhausteur de goût, facteur de protection de la flore intestinale. Ce complément alimentaire peut, le cas échéant, être concentré, lyophilisé ou atomisé en vue d'être ultérieurement reconstitué : il conserve toutes ses propriétés après reconstitution. De préférence, l'on utilise un lactosérum comprenant entre 55 et 65 g/l d'extrait sec et entre 40 et 52 g/l de lactose, et présentant un pH compris entre 4,3 et 5.

Le complément alimentaire conforme à l'invention se caractérise par la présence dans le lactosérum :
. de polysaccharides en solution, de concentration comprise entre 0,01 et 0,05 g par gramme de milieu,
. de levure Candida pseudotropicalis en quantité comprise en 10⁶ et 10⁸ germes par gramme,
. de levure Pichia membranaefaciens en quantité comprise entre 10⁴ et 10⁵ germes par gramme,
. et de bactéries Lactococcus lactis et raffinolactis en quantité globale comprise entre 10⁷ et 10⁹ bactéries par gramme,
. et de bactéries Lactobacillus fermentum en quantité comprise entre 10⁵ et 10⁶ bactéries par gramme.

De plus, selon le levain utilisé et notamment si l'on utilise le levain déjà décrit fabriqué à partir de grains de kéfir naturel, le complément alimentaire de l'invention contient également les bactéries suivantes : Bifidobacterium entre 10³ et 10⁵ par gramme de milieu, Acetobacter entre 10³ et 10⁵ par gramme, Leuconostoc entre 10³ et 10⁴ par gramme.

Sur le plan de l'acidité, le complément conforme à l'invention se caractérise par un pH sensiblement compris entre 3,4 et 4. L'analyse physicochimique a permis de mettre en évidence la richesse vitaminique de ce complément qui se caractérise par la présence :
. de polysaccharides en solution constitués par du glucose et du galactose en pourcentage relatif compris entre 0,6 et 1 g de glucose par g de galactose,
. d'acide orotique (vitamine B₁₃) en proportion comprise entre 30 et 240 mg par litre de produit (30 à 80 mg pour le produit directement obtenu ; jusqu'à 240 mg pour un produit concentré),
. d'acide folique (vitamine B₉) en proportion comprise entre 0,20 et 1,5 mg par litre de produit (0,20 à 0,50 mg pour le produit directement obtenu ; jusqu'à 1,5 mg pour un produit concentré),
. de vitamines B₁, B₂, B₅, B₆ et PP, en proportion globale comprise entre 5 et 60 mg par litre de produit (5 à 20 mg pour le produit directement obtenu ; jusqu'à 60 mg pour un produit concentré).

La description qui suit fournit, à titre d'illustration, un exemple de fabrication d'un levain conforme à l'invention et d'un complémentaire pour l'animal obtenu à partir de celui-ci, avec ses caractéristiques biologiques, physicochimiques, et zootechniques.

Les analyses microbiologiques ont été effectuées dans ces exemples par les méthodes suivantes :

### Milieu d'isolement et de purification :

- analyse des levures en milieu Sabouraud + Gentamicine et milieu de P.D.A. et comptage par dilution,
- analyse des bactéries en milieu MRS, milieu M₁₇, milieu Elliker, milieu M.S.E. + aride et milieu P.C.A. et comptage par dilution.

### Galeries d'identification (API) :

- API 50 CHL
- API 20 C
- API 20 NE médium
- API 20 E

Les analyses physicochimiques ont été effectuées par les méthodes suivantes :
- analyse des constituants du lactosérum par "MILKO-SCAN 104",
- analyse des sucres par spectrométrie et chromatographie,
- analyse des viscosités par la méthode de Broockfield,
- définition du pH au moyen d'un pHmètre de type classique,
- analyse des vitamines par méthodes enzymatiques et chromatographiques traditionnelles.

### Exemple 1 : Fabrication d'un levain conforme à l'invention Ferment utilisé

Le ferment utilisé est constitué par des grains de kéfir naturel, sous-produit d'un lait caillé d'origine extrême-orientale, produit qui a été importé en FRANCE au début des années 60 ; ces grains de kéfir transmis de main en main ont été jusqu'ici utilisés empiriquement mélangés à du lait pour donner une boisson qui aurait certaines vertus particulières (revitalisantes). Ces grains ce kéfir se présentent sous la forme d'une sorte de chou-fleur blanchâtre de tailles variant entre un et quelques centimètres.

L'analyse microbiologique de ces grains de kéfir a donné les résultats suivants par gramme de kéfir (valeur moyenne) :
. levure Pichia membranaefaciens : 2.10⁶germes,
. levure Candida pseudo-tropicalis : 10⁵ germes,
. autres levures lactose + (- densité plus faible non décomptée),
. bactéries Lactococcus lactis lactis : 2.10⁸ bactéries,
. bactéries Lactococcus raffinolactis : 2.10⁶ bactéries,
. bactéries Lactococcus lactis diacetylactis : 2.10⁶ bactéries,
. bactéries Lactobacillus fermentum : 4.10⁶ bactéries,
. bactéries Bifidobacterium : 10⁴ bactéries,
. bactéries Acetobacter : 10⁴ bactéries,
. bactéries Leuconostocs mesenteroïdes : 2.10⁴ bactéries,
. bactéries Lactobacillus casei (densité plus faible non décomptée).

La souche de levure Pichia membranaefaciens a été déposée à la CNCM (Collection Nationale de Cultures de Microorganismes) de l'Institut Pasteur, le 17.11.88, sous le n° I-817.

### Lactosérum utilisé

Le lactosérum utilisé est du lactosérum acide pasteurisé à 90°/95° C pendant 30 minutes, avec la composition suivante : 59 g/kg ∓ 1 g de matière sèche, 1 g/kg de matière grasse, 44 g/kg ∓ 1 g de lactose et 1,4 g/kg de protéines. Le pH de ce lactosérum est de 4,3.

### Fabrication du levain

Un récipient de type Erlen Meyer de 0,5 litre ce lactosérum sous agitation en va-et-vient (80 oscillations/minute) a été régulé à une température de 30° C ∓ 0,5°. Un ensemencement au moyen du ferment décrit plus haut a été effectué à raison de 50 g de ferment par litre de lactosérum.

Le produit est laissé à 30° C dans le récipient pendant 20 heures sous agitation continue. Des contrôles de pH toutes les deux heures montrent que le pH égal au départ à 4,3 s'abaisse régulièrement jusqu'à une valeur finale de 3,8 au terme des 20 heures.

Le produit est ensuite refroidi en moins de 30 mn jusqu'à 25° C, il est laissé 36 heures à cette température sous agitation continue pour une nouvelle fermentation ; le pH final est de 3,4.

La fraction liquide est soutirée du récipient aseptiquement. Elle est lyophilisée par un procédé traditionnel, par un appareil "Sérail" (congélation à - 40° C, mise sous vide et sublimation).

### Levain obtenu

Avant la lyophilisation, le levain ainsi fabriqué a été analysé et les résultats suivants ont été obtenus (nombre de germes par g, valeur moyenne) :
. 4.10⁵ Pichia membranaefaciens,
. 6.10⁵ Candida pseudotropicalis,
. 2.10⁸ Lactocoques,
. 15.10⁵ Lactobacilles,
. 10⁴ Bifidobacterium,
. 7.10³ Acetobacter,
. 8.10³ Leuconostoc.

Après la lyophilisation, on constate une perte de 50 %.

De plus, le levain avant lyophilisation présente une concentration en polysaccharides en solution, de 0,03 g par gramme de levain ; ces polysaccharides comprennent du glucose et du galactose en pourcentage relatif égal à 0,8 g de glucose par g de galactose. En outre, le levain comprend 71 mg d'acide orotique par litre.

### Exemple 2 : Fabrication d'un complément alimentaire solide pour l'alimentation animale, à partir du levain précité

Le lactosérum acide utilisé pour cette préparation est le même que celui utilisé pour la fabrication du levain.

Ce lactosérum est introduit dans une cuve de maturation ultra-propre (600 litres) type "GOAVEC" régulée à une température de 30° C ∓ 0,5° C.

L'ensemencement au moyen du levain lyophilisé est réalisé en direct à l'aide d'une pompe "MOUVEX S4", à raison de 2 % en poids sous agitation 10 trs/mn pendant le remplissage.

Le produit est laissé à 30° C dans la cuve de maturation pendant 48 heures. Le pH au bout de 48 heures est de 3,9.

Le lactosérum, qui a subi cette première fermentation, est refroidi à 25° C et est laissé à cette température pendant 72 heures pour subir une seconde fermentation ; son pH final est de 3,65.

Le produit est ensuite soutiré par une pompe positive type "MOUVEX S4" à vitesse de rotation lente et à débit régulé.

Le produit est conditionné en conteneur de 100 l. Il est ensuite réduit en poudre par atomisation dans des conditions traditionnelles.

### Produit obtenu

Le produit obtenu réalisé à partir du levain précité, se présente ainsi avant atomisation :
- consistance liquide,
- aspect homogène,
- absence de décantation et de pétillant,
- odeur aromatisée.

Ses caractéristiques sont les suivantes :
- viscosité à J + 1 : 2 500 centipoises,
- pH à J + 1 : 3,65 ,
- numération à J + 1 (germes par g) :
   . Candida pseudotropicalis : 10⁶,
   . Pichia membranaefaciens : 10⁴,
   . Lactococcus lactis et raffinolactis: 10⁸,
   . Lactobacillus fermentum : 10⁶,
   . Bifidobacterium : 10⁴,
   . Acetobacter : 10⁴,
   . Leuconostoc : 5.10³,
- concentration en acide orotique : 70 mg/l,
- concentration en acide folique : 0,35 mg/l,
- concentration globale en vitamines B₁, B₂, B₅, B₆ et PP : 12 mg/l (chacune de ces vitamines ayant été identifiée par l'analyse),
- concentration de polysaccharide : 0,03 g/l.

Après atomisation (procédé de granulométrie inférieur ou égal à 180 microns, coloration crème), on constate une perte de moins de 6 % en vitamines, acide folique et acide orotique ; la perte en microorganismes est de l'ordre de 50 %. La poudre obtenue se prête à un compactage pour réaliser des granulés.

Des essais d'addition du produit en poudre à une alimentation à base de céréales ont été effectués sur un lot de poules pondeuses (un lot traité de 5 200 poules et un lot témoin de même nombre, agées de 22 semaines).

De la 22ème semaine à la 37ème semaine, chaque poule d'un lot a reçu 0,5 g par jour de l'additif précité.

De la 38ème semaine à la 62ème semaine, cette quantité a été portée à 1 g par jour.

On a constaté que les poules du lot ayant reçu le complément alimentaire de l'invention ont produit 13 % de plus d'oeufs que les poules du lot témoin, le poids des oeufs chez les poules traitées étant supérieur de 2,3 % par rapport à ceux du lot témoin, cependant que le pourcentage d'oeufs déclassés avait diminué de 34 %. De plus, le pourcentage de mortalité chez les poules avait diminué de 54 % par rapport au lot témoin. A la 62ème semaine, les poules du lot traité pesaient en moyenne 10 % de plus que celles du lot témoin.

### Exemple 3 : Fabrication d'un complément alimentaire concentré liquide à partir du levain précité

Le produit liquide fabriqué à l'exemple 2 est concentré à l'aide d'un évaporateur sous vide à couche mince centrifugée ("EVAPOR type CEP₁") à température de 25° C. Il est concentré de façon à réduire son volume des deux tiers.

Le produit est ensuite conditionné en conteneur de 25 l.

Après concentration, le produit se présente sous la forme d'un liquide visqueux, de viscosité égale à 6 200 centipoises, de pH 3,8. On ne constate aucune perte de vitamine par rapport au produit avant concentration (moins de 2 %) ; la perte en microorganismes est de l'ordre de 10 %.

Ce produit peut être utilisé comme complément, en particulier en proportion d'environ 2 %, dans un milieu liquide pour l'alimentation animale.

### Exemple 4 : Fabrication d'un complément alimentaire concentré à partir de levain précité

Le produit liquide fabriqué à l'exemple 2 est pasteurisé à 95° C pendant 5 minutes pour inactiver ses micro-organismes. Il est ensuite atomisé selon l'exemple 2 ou concentré selon l'exemple 3 afin de constituer un complément alimentaire sous forme de poudre ou de liquide concentré, riche en vitamines B mais exempt de microorganismes vivants ; dans certaines applications, on évite ainsi une évolution de l'aliment par fermentations indésirables.

## Revendications

1. Procédé de fabrication d'un nouveau levain lactique, du type consistant à faire fermenter un lactosérum en présence d'un ferment lactique mixte renfermant une symbiose de levures et de bactéries, caractérisé en ce que :
- le ferment utilisé comprend une matrice polysaccharidique englobant, d'une part, au moins deux levures : levure du genre Pichia espèce membranaefaciens et levure du genre Candida espèce pseudotropicalis, d'autre part, au moins les deux bactéries suivantes : bactérie du genre Lactococcus espèce lactis, bactérie du genre Lactobacillus espèce fermentum,
- le lactosérum contenant le ferment est soumis à une première fermentation à température sensiblement comprise entre 26° C et 35° C pendant une durée sensiblement comprise entre 16 heures et 25 heures,
- le produit obtenu est soumis à une seconde fermentation à une température sensiblement comprise entre 21° C et 28° C pendant une durée sensiblement comprise entre 24 et 48 heures.

2. Procédé selon la revendication 1, caractérisé en ce que le ferment est mélangé au lactosérum de façon que le mélange en début de fermentation contienne :
. entre 10⁵ et 10⁶ germes de levure Pichia membranaefaciens par millilitre de lactosérum,
. entre 10⁴ et 10⁵ germes de levure Candida pseudotropicalis par millilitre de lactosérum,
. entre 10⁷ et 10⁸ bactéries Lactococcus par millilitre de lactosérum,
. et entre 10⁵ et 10⁷ bactéries Lactobacillus par millilitre de lactosérum.

3. Procédé selon l'une des revendications 1 ou 2, caractérisé en ce que l'on utilise un ferment renfermant une symbiose de :
. levure du genre Pichia espèce membranaefaciens,
. levure du genre Candida espèce pseudotropicalis,
. bactéries du genre Lactococcus espèce lactis sous espèce lactis,
. bactéries du genre Lactococcus espèce raffinolactis,
. bactéries du genre Lactococcus espèce lactis sous espèce diacetylactis,
. bactéries du genre Lactobacillus espèce fermentum,
. bactéries du genre Bifidobacterium,
. bactéries du genre Acetobacter,
. bactéries du genre Leuconostoc.

4. Procédé selon l'une des revendications 1, 2 ou 3, caractérisé en ce que l'on utilise un ferment dont la matrice polysaccharidique est à base de glucose et de galactose.

5. Procédé selon les revendications 3 et 4 prises ensemole, caractérisé en ce que l'on utilise comme ferment des grains de kéfir lacté ou sucré du type renfermant dans une matrice polysaccharidique une symbiose de levures Pichia membranaefaciens, Candida pseudotropicalis et de bactéries Lactococcus lactis et raffinolactis, Lactobacillus fermentum, Bifidobacterium, Acetobacter et Leuconostoc.

6. Procédé selon la revendication 5, caractérisé en ce que l'on mélange au lactosérum une quantité de grains de kéfir comprise entre 40 g et 80 g par litre.

7. Procédé selon l'une des revendications précédentes, caractérisé en ce que le lactosérum contenant le ferment est soumis à une première fermentation à une température sensiblement égale à 30° C pendant une durée sensiblement égale à 20 heures et à une seconde fermentation à une température sensiblement égale à 25° C pendant une durée sensiblement égale à 36 heures.

8. Procédé selon l'une des revendications précédentes, caractérisé en ce que l'on utilise un lactosérum contenant entre 40 g et 52 g de lactose par litre et présentant un pH compris entre 4,3 et 5.

9. Procédé selon l'une des revendications précédentes, dans lequel, au terme de la double fermentation, l'on sépare la phase liquide et la phase solide, cette dernière étant recyclée pour un nouveau cycle de fabrication, cependant que la phase liquide est stabilisée et conditionnée pour constituer le levain.

10. Levain lactique fabriqué par le procédé conforme à l'une des revendications 1 à 9, caractérisé par la présence dans du lactosérum :
. de polysaccharides en solution, de concentration comprise entre 0,05 et 0,1 g par gramme de milieu,
. de levure Candida pseudotropicalis en quantité comprise entre 10⁶ et 10⁷ germes par gramme de milieu,
. de levure Pichia membranaefaciens en quantité comprise entre 10⁴ et 10⁶ germes par gramme de milieu,
. de bactéries Lactococcus en quantité comprise entre 10⁷ et 10⁹ bactéries par gramme,
. et de bactéries Lactobacillus en quantité comprise entre 10⁵ et 10⁷ bactéries par gramme.

11. Levain lactique selon la revendication 10, caractérisé en ce qu'il contient également les bactéries suivantes : Bifidobacterium entre 10³ et 10⁵ par gramme du milieu, Acetobacter entre 10³ et 10⁵ par gramme, Leuconostoc entre 10³ et 10⁵ par gramme.

12. Levain lactique selon l'une des revendications 10 ou 11, caractérisé en ce que :
. le rapport du nombre de germes de la levure du genre Candida au nombre de germes des autres levures est compris entre 20 et 60,
. le rapport du nombre de bactéries sous forme de coques (Lactococcus, Acetobacter, Leuconostoc) au nombre de bactéries sous forme de bacille (Lactobacillus, Bifidobacterium) est compris entre 150 et 250.

13. Levain selon l'une des revendications 10, 11 ou 12, se caractérisant par un pH sensiblement compris entre 3,2 et 3,8 et par la présence :
. de polysaccharides en solution constitués par du glucose et du galactose en pourcentage relatif compris entre 0,6 et 1 g de glucose par g de galactose,
. d'acide orotique en proportion comprise entre 20 et 70 mg par litre de milieu.

14. Procédé de fabrication d'un nouveau complément alimentaire du type lactosérum fermenté, consistant à soumettre un lactosérum à une double fermentation en présence d'un levain lactique, caractérisé en ce que :
- l'on utilise un levain lactique conforme à l'une des revendications 10 à 13,
- le lactosérum contenant ledit levain est soumis à une première fermentation à une température sensiblement comprise entre 26° C et 35° C pendant une durée sensiblement comprise entre 24 et 72 heures,
- le produit obtenu est soumis à une seconde fermentation à une température inférieure à la première, sensiblement comprise entre 21° C et 28° C pendant une durée sensiblement comprise entre 48 et 96 heures.

15. Procédé selon la revendication 14, caractérisé en ce que l'on mélange au lactosérum une proportion pondérale de levain par rapport audit lactosérum comprise entre 1 % et 4 %.

16. Procédé selon l'une des revendications 14 ou 15, caractérisé en ce que :
. la première fermentation est conduite à une température sensiblement égale à 30° C pendant une durée sensiblement égale à 48 heures,
. la seconde fermentation est conduite immédiatement après la première à une température sensiblement égale à 25° C pendant une durée sensiblement égale à 72 heures.

17. Procédé selon l'une des revendications 14, 15 ou 16 dans lequel l'on utilise un lactosérum comprenant entre 40 et 52 g de lactose par litre et entre 55 et 65 g/l d'extrait sec, et présentant un pH compris entre 4,3 et 5.

18. Complément alimentaire du type lactosérum fermenté, fabriqué par le procédé conforme à l'une des revendications 14 à 17, caractérisé par la présence dans un lactosérum :
. de polysaccharides en solution, de concentration comprise entre 0,01 et 0,05 g par gramme de milieu,
. de levure Candida pseudotropicalis en quantité comprise entre 10⁶ et 10⁸ germes par gramme,
. de levure Pichia membranaefaciens en quantité comprise entre 10⁴ et 10⁵ germes par gramme,
. de bactéries Lactococcus lactis et raffinolactis en quantité globale comprise entre 10⁷ et 10⁹ bactéries par gramme,
. et de bactéries Lactobacillus fermentum en quantité comprise entre 10⁵ et 10⁶ bactéries par gramme.

19. Complément alimentaire selon la revendication 18, caractérisé en ce qu'il contient également les bactéries suivantes : Bifidobacterium entre 10³ et 10⁵ par gramme de milieu, Acetobacter entre 10³ et 10⁵ par gramme, Leuconostoc entre 10³ et 10⁴ par gramme.

20. Complément alimentaire selon l'une des revendications 18 ou 19, se caractérisant par un pH sensiblement compris entre 3,4 et 4 et par la présence :
. de polysaccharides en solution constitués par du glucose et du galactose en pourcentage relatif compris entre 0,6 et 1 g de glucose par g de galactose,
. d'acide orotique en proportion comprise entre 30 et 240 mg par litre de produit,
. d'acide folique en proportion comprise entre 0,20 et 1,5 mg par litre de produit,
. de vitamines B₁, B₂, B₅, B₆ et PP, en proportion globale comprise entre 5 et 60 mg par litre de produit.

## Claims

1. Method for manufacturing a new lactic leaven of the type which consists in causing a lactoserum to ferment in the presence of a mixed lactic fermenting agent comprising a symbiosis of yeasts and bacteria, characterised in that:
- the yeast which is used comprises a polysaccharide matrix including, on the one hand, at least two yeasts - yeast pertaining to the species membranaefaciens of the genus Pichia and yeast pertaining to the species pseudotropicalis of the genus Candida - and on the other hand at least the following two bacteria - bacteria pertaining to the species lactis of the genus Lactococcus and bacteria pertaining to the species fermentum of the genus Lactobacillus,
- the lactoserum comprising the fermenting agent is subjected to a first fermentation at a temperature substantially between 26°C and 35°C for a period substantially between 16 hours and 25 hours,
- the product obtained is subjected to a second fermentation process at a temperature substantially between 21°C and 28°C for a period substantially between 24 and 48 hours.

2. Process according to Claim 1, characterised in that the fermenting agent is admixed to the lactoserum in such a way as to ensure that at the start of fermentation the mixture comprises:
. between 10⁵ and 10⁶ viable cells of the yeast Pichia membranaefaciens per millilitre of lactoserum,
. between 10⁴ and 10⁵ viable cells of the yeast Candida pseudotropicalis per millilitre of lactoserum,
. between 10⁷ and 10⁸ Lactococcus bacteria per millilitre of lactoserum,
. and between 10⁵ and 10⁷ Lactobacillus bacteria per millilitre of lactoserum.

3. Method according to one of Claims 1 or 2, characterised in that use is made of a fermenting agent comprising a symbiosis of:
. yeast pertaining to the species membranaefaciens of the genus Pichia,
. yeast pertaining to the species pseudotropicalis of the genus Candida,
. bacteria pertaining to the subspecies lactis of the species lactis of the genus Lactococcus,
. bacteria pertaining to the species raffinolactis of the genus Lactococcus,
. bacteria pertaining to the subspecies diacetylactis of the species lactis of the genus Lactococcus,
. bacteria pertaining to the species fermentum of the genus Lactobacillus,
. bacteria pertaining to the genus Bifidobacterium,
. bacteria pertaining to the genus Acetobacter,
. bacteria pertaining to the genus Leuconostoc.

4. Method according to one of Claims 1, 2 or 3, characterised in that use is made of a fermenting agent having a polysaccharide matrix based on glucose and galactose.

5. Method according to Claims 3 and 4 jointly, characterised in that by way of fermenting agent use is made of grains of lacteous or sugary kefir of the type comprising within a polysaccharide matrix a symbiosis of Pichia membranaefaciens and Candida pseudotropicalis yeasts and of Lactococcus lactis and raffiniolactis bacteria as well as of Lactobacillus fermentum, Bifidobacterium, Acetobacter and Leuconostoc bacteria.

6. Method according to Claim 5, characterised in that a quantity of kefir grains between 40 g and 80 g per litre is admixed to the lactoserum.

7. Method according to one of the preceding claims, characterised in that the lactoserum containing the fermenting agent is subjected to a first fermentation at a temperature substantially equal to 30°C for a period substantially equal to 20 hours and to a second fermentation at a temperature substantially equal to 25°C for a period substantially equal to 36 hours.

8. Method according to one of the preceding claims, characterised in that use is made of a lactoserum comprising between 40 g and 52 g of lactose per litre and having a pH between 4.3 and 5.

9. Method according to one of the preceding claims, in which at the end of the double fermentation the liquid phase is separated from the solid phase, the latter being recycled for a new manufacturing cycle whereas the liquid phase is stabilised and conditioned so as to constitute the leaven.

10. Lactic leaven manufactured by the method according to one of Claims 1 to 9, characterised by the presence in the lactoserum of the following constituents:
. polysaccharides in solution at a concentration between 0.05 and 0.1 g per gram of medium,
. Candida pseudotropicalis yeast in a quantity between 10⁶ and 10⁷ viable cells per gram of medium,
. Pichia membranaefaciens yeast in a quantity between 10⁴ and 10⁶ viable cells per gram of medium,
. Lactococcus bacteria in a quantity between 10⁷ and 10⁹ bacteria per gram,
. Lactobacillus bacteria in a quantity between 10⁵ and 10⁷ bacteria per gram.

11. Lactic leaven according to Claim 10, characterised in that it also contains the following bacteria: Bifidobacterium between 10³ and 10⁵ bacteria per gram of the medium, Acetobacter between 10³ and 10⁵ per gram, Leuconostoc between 10³ and 10⁵ per gram.

12. Lactic leaven according to one of Claims 10 or 11, characterised in that:
. the ratio of the number of viable cells pertaining to yeast of the genus Candida to the number of viable cells pertaining to the other yeasts amounts to between 20 and 60,
. the ratio of the number of bacteria in the form of cocci (Lactococcus, Acetobacter, Leuconostoc) to the number of bacteria in the form of bacilli (Lactobacillus, Bifidobacterium) amounts to between 150 and 250.

13. Yeast according to one of Claims 10, 11 or 12, characterized by a pH substantially between 3.2 and 3.8 and by the presence of:
. polysaccharides in solution constituted by glucose and galactose in a relative proportion between 0.6 and 1 g glucose per g of galactose,
. orotic acid in a proportion between 20 and 70 mg per litre of medium.

14. Method for manufacturing a new food supplement of the fermented lactoserum type, consisting in subjecting a lactoserum to a double fermentation in the presence of a lactic leaven, characterized in that:
- use is made of a lactic leaven according to one of Claims 10 to 13,
- the lactoserum containing said leaven is subjected to a first fermentation at a temperature substantially between 26°C and 35°C for a period substantially between 24 and 72 hours,
- the product obtained is subjected to a second fermentation at a temperature lower than the first temperature, substantially between 21°C and 28°C for a period substantially between 48 and 96 hours.

15. Method according to Claim 14, characterised in that leaven is admixed to the lactoserum, the proportion by weight of leaven in relation to said lactoserum being between 1% and 4%.

16. Method according to one of Claims 14 or 15, characterised in that:
. the first fermentation is carried out at a temperature substantially equal to 30°C for a period substantially equal to 48 hours,
. the second fermentation is carried out immediately after the first at a temperature substantially equal to 25°C for a period substantially equal to 72 hours.

17. Method according to one of Claims 14, 15 or 16 in which use is made of a lactoserum comprising between 40 and 52 g lactose per litre and between 55 and 65 g/l of dry extract and having a pH between 4.3 and 5.

18. Food supplement of the fermented lactoserum type manufactured by the method according to one of Claims 14 to 17, characterized by the presence in a lactoserum of the following substances:
. polysaccharides in solution at a concentration between 0.01 and 0.05 g per gram of medium,
. Candida pseudotropicalis yeast in a quantity between 10⁶ and 10⁸ viable cells per gram,
. Pichia membranaefaciens yeast in a quantity between 10⁴ and 10⁵ viable cells per gram,
. Lactococcus lactis and raffinolactis bacteria in a total quantity between 10⁷ and 10⁹ bacteria per gram,
. and Lactobacillus fermentum bacteria in a quantity between 10⁵ and 10⁶ bacteria per gram.

19. Food supplement according to Claim 18, characterized in that it also contains the following bacteria: Bifidobacterium between 10³ and 10⁵ bacteria per gram of medium, Acetobacter between 10³ and 10⁵ bacteria per gram, Leuconostoc between 10³ and 10⁴ bacteria per gram.

20. Food supplement according to one of Claims 18 or 19, characterized by a pH substantially between 3.4 and 4 and by the presence of:
. polysaccharides in solution constituted by glucose and galactose in a relative proportion between 0.6 and 1 g of glucose per g of galactose,
. orotic acid in a proportion amounting to between 30 and 240 mg per litre of product,
. folic acid in a proportion amounting to between 0.20 and 1.5 mg per litre of product,
. vitamins B₁, B₂, B₅, B₆ and PP, in a total proportion between 5 and 60 mg per litre of product.

## Patentansprüche

1. Verfahren zum Herstellen eines neuen Milchsäuresauerteigs der Art, die darin besteht, ein Lactoserum in Gegenwart eines gemischten Milchsäuregärpräparats, das eine Symbiose von Hefen und Bakterien umfaßt, zur Gärung zu bringen, dadurch gekennzeichnet,
- daß das zum Einsatz gelangende Gärpräparat eine Polysaccharid- Grundsubstanz umfaßt, die einerseits mindestens zwei Hefen - Hefe der Art membranaefaciens der Gattung Pichia und Hefe der Art pseudotropicalis der Gattung Candida - und andererseits mindestens die folgenden beiden Bakterien - Bakterien der Art lactis der Gattung Lactococcus und Bakterien der Art fermentum der Gattung Lactobacillus -umfaßt,
- daß das das Gärpräparat enthaltende Lactoserum während einer Zeitspanne, die im wesentlichen zwischen 16 Stunden und 25 Stunden beträgt, bei einer im wesentlichen zwischen 26°C und 35°C betragenden Temperatur einer ersten Gärung unterzogen wird,
- daß das erhaltene Produkt während einer Zeitspanne, die im wesentlichen zwischen 24 und 48 Stunden beträgt, bei einer im wesentlichen zwischen 21°C und 28°C betragenden Temperatur einer zweiten Gärung unterzogen wird.

2. Verfahren nach Anspruch 1, dadurch gekennzeichnet, daß das Gärpräparat dem Lactoserum so beigemischt wird, daß das Gemisch zu Beginn der Gärung die folgenden Bestandteile enthält:
. zwischen 10⁵ und 10⁶ lebensfähige Zellen der Hefe Pichia membranaefaciens pro Milliliter Lactoserum,
. zwischen 10⁴ und 10⁵ lebensfähige Zellen der Hefe Candida pseudotropicalis pro Milliliter Lactoserum,
. zwischen 10⁷ und 10⁸ Lactococcus-Bakterien pro Milliliter Lactoserum,
. und zwischen 10⁵ und 10⁷ Lactobacillus-Bakterien pro Milliliter Lactoserum.

3. Verfahren nach einem der Ansprüche 1 oder 2, dadurch gekennzeichnet, daß von einem Gärpräparat Gebrauch gemacht wird, das eine Symbiose der folgenden Bestandteile umfaßt:
. Hefe der Art membranaefaciens der Gattung Pichia,
. Hefe der Art pseudotropicalis der Gattung Candida,
. Bakterien der Unterart lactis der Art lactis der Gattung Lactococcus,
. Bakterien der Art raffinolactis der Gattung Lactococcus,
. Bakterien der Unterart diacetylactis der Art lactis der Gattung Lactococcus,
. Bakterien der Art fermentum der Gattung Lactobacillus,
. Bakterien der Gattung Bifidobacterium,
. Bakterien der Gattung Acetobacter,
. Bakterien der Gattung Leuconostoc.

4. Verfahren nach einem der Ansprüche 1, 2 oder 3, dadurch gekennzeichnet, daß von einem Gärpräparat Gebrauch gemacht wird, dessen Polysaccharid-Grundsubstanz auf Glucose und Galactose beruht.

5. Verfahren nach den Ansprüchen 3 und 4 gemeinsam, dadurch gekennzeichnet, daß als Gärpräparat von Körnern von milchsauerem oder zuckrigem Kefir der in einer Polysaccharid-Grundsubstanz eine Symbiose von Hefen Pichia membranaefaciens und Candida pseudotropicalis sowie von Bakterien Lactococcus lactis und raffinolactis, Lactobacillus fermentum, Bifidobacterium, Acetobacter und Leuconostoc umfassenden Art Gebrauch gemacht wird.

6. Verfahren nach Anspruch 5, dadurch gekennzeichnet, daß man dem Lactoserum eine Menge von Kefirkörnern beimischt, die zwischen 40 g und 80 g pro Liter beträgt.

7. Verfahren nach einem der vorstehenden Ansprüche, dadurch gekennzeichnet, daß das das Gärpräparat enthaltende Lactoserum während einer Zeitspanne, die im wesentlichen 20 Stunden beträgt, bei einer im wesentlichen 30°C betragenden Temperatur einer ersten Gärung und während einer Zeitspanne, die im wesentlichen 36 Stunden beträgt, bei einer im wesentlichen 25°C betragenden Temperatur einer zweiten Gärung unterzogen wird.

8. Verfahren nach einem der vorstehenden Ansprüche, dadurch gekennzeichnet, daß von einem Lactoserum Gebrauch gemacht wird, das zwischen 40 g und 52 g Lactose pro Liter enthält und einen pH-Wert zwischen 4,3 und 5 aufweist.

9. Verfahren nach einem der vorstehenden Ansprüche, bei dem man nach Abschluß des doppelten Gärungsprozesses die flüssige Phase von der festen Phase scheidet, wobei letztere zwecks Durchführung eines neuen Herstellungszyklus im Kreislauf geleitet wird, während die flüssige Phase stabilisiert und konditioniert wird, so daß sie den Sauerteig bildet.

10. Nach dem Verfahren im Einklang mit einem der Ansprüche 1 bis 9 hergestellter Milchsäuresauerteig, dadurch gekennzeichnet, daß die folgenden Bestandteile in dem Lactoserum enthalten sind:
. in Lösung befindliche Polysaccharide bei einer Konzentration zwischen 0,05 und 0,1 g pro Gramm Medium,
. Candida pseudotropicalis-Hefe, deren Anteil zwischen 10⁶ und 10⁷ lebensfähige Zellen pro Gramm Medium beträgt,
. Pichia membranaefaciens-Hefe, deren Anteil zwischen 10⁴ und 10⁶ lebensfähige Zellen pro Gramm Medium beträgt,
. Lactococcus-Bakterien, deren Anteil zwischen 10⁷ und 10⁹ Bakterien pro Gramm beträgt,
. und Lactobacillus-Bakterien, deren Anteil zwischen 10⁵ und 10⁷ Bakterien pro Gramm beträgt.

11. Milchsäuresauerteig gemäß Anspruch 10, dadurch gekennzeichnet, daß er auch die folgenden Bakterien enthält: Bifidobacterium zwischen 10³ und 10⁵ Bakterien pro Gramm Medium, Acetobacter zwischen 10³ und 10⁵ Bakterien pro Gramm, Leuconostoc zwischen 10³ und 10⁵ Bakterien pro Gramm.

12. Milchsäuresauerteig gemäß einem der Ansprüche 10 oder 11, dadurch gekennzeichnet,
. daß das Verhältnis der Anzahl von lebensfähigen Zellen der Hefe der Gattung Candida zu der Anzahl von lebensfähigen Zellen der anderen Hefen zwischen 20 und 60 beträgt,
. daß das Verhältnis der Anzahl von Bakterien in der Form von Kokken (Lactococcus, Acetobacter, Leuconostoc) zu der Anzahl von Bakterien in der Form von Bazillen (Lactobacillus, Bifidobacterium) zwischen 150 und 250 beträgt.

13. Sauerteig nach einem der Ansprüche 10, 11 oder 12, gekennzeichnet durch einen im wesentlichen zwischen 3,2 und 3,8 betragenden pH-Wert sowie durch das Vorhandensein von:
. in Lösung befindlichen Polysacchariden in der Form von Glucose und Galactose, wobei deren relative Anteile zwischen 0,6 und 1g Glucose pro g Galactose betragen,
. Orotsäure in einem Verhältnis zwischen 20 und 70 mg pro Liter Medium.

14. Verfahren zum Herstellen eines neuen Futterzusatzes der Art von gegärtem Lactoserum, wobei das besagte Verfahren darin besteht, ein Lactoserum in Gegenwart eines Milchsäuresauerteigs einem doppelten Gärungsprozeß zu unterziehen, dadurch gekennzeichnet,
- daß von einem Milchsäuresauerteig gemäß einem der Ansprüche 10 bis 13 Gebrauch gemacht wird,
- daß das den besagten Sauerteig enthaltende Lactoserum während einer Zeitspanne, die im wesentlichen zwischen 24 und 72 Stunden beträgt bei einer im wesentlichen zwischen 26°C und 35°C betragenden Temperatur einem ersten Gärungsprozeß unterzogen wird,
- daß das erhaltene Produkt während einer Zeitspanne, die im wesentlichen zwischen 48 und 96 Stunden beträgt, einem zweiten Gärungsprozeß unterzogen wird, und zwar bei einer Temperatur, die geringer ist als die Temperatur in dem ersten Gärungsprozeß und im wesentlichen zwischen 21°C und 28°C beträgt.

15. Verfahren nach Anspruch 14, dadurch gekennzeichnet, daß man dem Lactoserum einen Sauerteiganteil beimischt, der im Verhältnis zu dem besagten Lactoserum zwischen 1% und 4% nach Gewicht beträgt.

16. Verfahren nach einem der Ansprüche 14 oder 15, dadurch gekennzeichnet,
. daß der erste Gärungsprozeß während einer Zeitspanne, die im wesentlichen 48 Stunden beträgt, bei einer im wesentlichen 30°C betragenden Temperatur dem ersten Gärungsprozeß unterzogen wird,
. daß der zweite Gärungsprozeß unmittelbar nach dem ersten Gärungsprozeß durchgeführt wird, und zwar während einer Zeitspanne, die im wesentlichen 72 Stunden beträgt, bei einer im wesentlichen 25°C betragenden Temperatur.

17. Verfahren nach einem der Ansprüche 14, 15 oder 16, bei dem von einem Lactoserum Gebrauch gemacht wird, das zwischen 40 und 52 g Lactose pro Liter und zwischen 55 und 65 g/l Trockenextrakt umfaßt und einen pH-Wert zwischen 4,3 und 5 aufweist.

18. Futterzusatz der Art gegärtes Lactoserum, hergestellt nach dem Verfahren gemäß einem der Ansprüche 14 bis 17, dadurch gekennzeichnet, daß in einem Lactoserum die folgenden Bestandteile enthalten sind:
. in Lösung befindliche Polysaccharide in einer Konzentration zwischen 0,01 und 0,05 g pro Gramm Medium,
. Candida pseudotropicalis-Hefe mit einem Anteil zwischen 10⁶ und 10⁸ lebensfähigen Zellen pro Gramm,
. Pichia membranaefaciens-Hefe mit einem Anteil zwischen 10⁴ und 10⁵ lebensfähigen Zellen pro Gramm,
. Lactococcus lactis- und raffinolactis-Bakterien mit einem Gesamtanteil zwischen 10⁷ und 10⁹ Bakterien pro Gramm,
. und Lactobacillus fermentum-Bakterien mit einem Anteil zwischen 10⁵ und 10⁶ Bakterien pro Gramm.

19. Futterzusatz nach Anspruch 18, dadurch gekennzeichnet, daß er auch die folgenden Bakterien enthält: Bifidobacterium zwischen 10³ und 10⁵ pro Gramm Medium, Acetobacter zwischen 10³ und 10⁵ pro Gramm, Leuconostoc zwischen 10³ und 10⁴ pro Gramm.

20. Futterzusatz nach einem der Ansprüche 18 oder 19, gekennzeichnet durch einen im wesentlichen zwischen 3, 4 und 4 betragenden pH-Wert und durch das Vorhandensein von:
. in Lösung befindlichen Polysacchariden in der Form von Glucose und Galactose, wobei deren relative Anteile zwischen 0,6 und 1 g Glucose pro g Galactose betragen,
. Orotsäure, deren Anteil zwischen 30 und 240 mg pro Liter Produkt beträgt,
. Folsäure, deren Anteil zwischen 0,20 und 1,5 mg pro Liter Produkt beträgt,
. Vitamine B₁, B₂, B₅, B₆ und PP, deren Gesamtanteil zwischen 5 und 60 mg pro Liter Produkt beträgt.
